# EUROPEAN PATENT SPECIFICATION

(11) **EP 1 597 841 B1**
(45) Date of publication and mention of the grant of the patent: **01.10.2014**
(21) Application number: 04708079.1
(22) Date of filing: 04.02.2004
(51) Int. Cl.: G01S 5/02, H04W 64/00

(54) **METHOD AND SYSTEM FOR MONITORING MOBILE COMMUNICATION TERMINAL POSITION DETERMINATION PERFORMANCE BY USING WIRELESS COMMUNICATION NETWORK AND A-GPS**
VERFAHREN UND SYSTEM ZUR ÜBERWACHUNG DER POSITIONSBESTIMMUNGSLEISTUNG EINES MOBILEN KOMMUNIKATIONSENDGERÄTS UNTER VERWENDUNG EINES DRAHTLOSEN KOMMUNIKATIONSNETZES UND A-GPS
PROCEDE ET SYSTEME DE SURVEILLANCE DE LA PERFORMANCE EN MATIERE DE LOCALISATION D'UN TERMINAL DE COMMUNICATIONS MOBILE AU MOYEN D'UN RESEAU DE COMMUNICATIONS SANS FIL ET D'UN A-GPS

(30) Priority: 04.02.2003 KR 2003007036; 02.02.2004 KR 2004006781
(43) Date of publication of application: 23.11.2005
(73) Proprietor: SK Telecom Co., Ltd., Seoul 110-110 (KR)
(72) Inventor: CHA, Daejoon, Seoul 138-829 (KR); IHM, Jongtae, 304-502, Dongsin Apt., Seongnam-si, Gyeonggi-do 463-797 (KR); SHIN, Sungho, 103-2501, Taeyoung Apt., 660, Seoul 121-080 (KR)
(74) Representative: Noble, Nicholas
(86) International application number: PCT/KR2004/000198
(87) International publication number: WO 2004/070513

(56) References cited:
- DE-A1- 10 110 136
- JP-A- 2003 255 039
- US-A1- 2002 154 058
- US-A1- 2003 148 671

## Description

The present disclosure relates to a method and a system for monitoring performance pertinent to a position determination of a mobile communication terminal, and more particularly to a method and system for monitoring performance pertinent to position determination of a mobile communication terminal by using various parameters defined in IS (Interim Standard) -801-1 in determining position of a mobile communication terminal in wireless/mobile communication network environment using an A-GPS scheme.

Many companies are struggling to develop new wireless Internet technologies which can be used to provide various communication services, such as wireless Internet services, regardless of places. Wireless Internet refers to an environment or technology which allows a moving user to access the Internet through a wireless network. With the development of mobile communication technologies and the explosive increase in the use of mobile phones, the wireless Internet services have also been greatly developed.

Among a variety of wireless Internet services provided to mobile terminals, such as cellular phones, PDAs or notebook computers, a LBS(Location Based Service) is being popularized more and more due to its wide applications and availability. The LBS can be used in various applications and conditions, such as emergency assistance, criminal tracking, GIS (Geographic Information System), difference of mobile communication fees according to locations, traffic information, vehicle navigation, logistics control and location-based CRM (Customer Relationship Management).

In order to exploit the LBS, it is required to identify the location of a mobile communication terminal. A GPS(Global Positioning System) is generally used to track the location of a mobile communication terminal.

The GPS is a worldwide navigation and positioning system which determines the location of an object on earth by using 24 GPS satellites orbiting the earth at an elevation of approximately 20,000 km. The GPS uses radio waves in a bandwidth of 1.5 GHz. Ground control stations which monitor the GPS satellites receive information transmitted from the satellites and synchronize transmission time. Users can monitor their locations by using GPS receivers. Generally, the GPS determines the location of an object by triangulation using four satellites. Three satellites are used for accurate triangulation, and a fourth satellite is in orbit to correct a timing error.

To be more specific, in the GPS system, since position of 3 satellites are already known, a position fix is performed by measuring distance between the satellites and a GPS receiver. The distance between the satellites and the GPS receiver can be obtained by multiplying the light speed by a wave propagation time between the satellite and the GPS receiver, in which the wave propagation time can be obtained by calculating time difference between the transmission time at the satellite and the reception time at the GPS receiver equipped with an internal clock.

In the meantime, the GPS has numerous advantages that, among others, it is open to anyone in the world, there is no constraint in the number of users, both a real-time position fix and a continuous tracking are possible and accuracy of position fix thereof is rather high enough for various applications.

However, it is difficult to determine the location of an object in downtown areas surrounded by high-rise buildings due to so-called multi-path effects and the lack of visible satellites. Also, an accurate location determination can hardly be made in a tunnel, subway or in a basement of a building where satellites are not visible (where radio waves cannot reach). In addition, GPS receivers may require a TTFF (Time To First Fix) of several minutes to over ten minutes to initially determine their location, thereby causing inconvenience to the users of location-based wireless Internet services.

A-GPS answers some of the inherent problems with GPS. The A-GPS determines the location of a mobile communication terminal by combining GPS with wireless communication network resources. A mobile communication terminal collects geolocation information from both the GPS satellites and the wireless communication network to determine its 3-dimensional location in geodetic coordinates (latitude, longitude and altitude) with high accuracy. The wireless network and the mobile communication terminal transmit and receive data or messages containing parameters defined in IS(Interim Standard)-801-1.
Document US2002154058 discloses a terminal including a GPS section for receiving and a call processing section coupled to the GPS section via an interface.

Meanwhile, performance evaluation of the position determination in the position determination system for a mobile communication terminal is crucial to the communication network operator. Current performance evaluation in the A-GPS scheme, however, currently stays at the level of simply monitoring call flow messages defined in the IS-801-1 displayed on the monitor screen of a laptop computer. This bears such shortcomings that it cannot identify reasons for poor position fix performance while it only find the fact that normal position fix is suffering. In other words, the conventional position determination system cannot identify whether the poor position determination performance stems from the devices employed in the wireless communication network, from defects in the mobile communication terminal or from topography(for instance, high-rise building, mountain, trees, etc.), thereby hinders taking prompt measures thereto.

Aspects and features of the present invention are set out in the appended claims.

The present disclosure has been made to solve the above-mentioned problems occurring in the prior art, and an object of the present disclosure is to provide a method and system for monitoring performance pertinent to position determination of a mobile communication terminal by using various parameters defined in IS (Interim Standard) - 801-1 in determining position of a mobile communication terminal in wireless/mobile communication network environment using an A-GPS scheme.

There is provided a system for monitoring performance of a position determination of a mobile communication terminal by using a wireless network and an A (Assisted) -GPS, the system comprising: the mobile communication terminal equipped with a GPS module for picking up GPS radio wave containing a navigation data from a GPS satellite and transmitting the navigation data to the wireless network; a test device, connected to the mobile communication terminal through wired/radio link, for being loaded with and running a LBS wireless network analysis program, wherein the LBS wireless network analysis program gathers, analyzes and processes data pertinent to the position determination and classifies processed data by at least one classification reference and displays classified data in the format of text or graph; and a position determination server for receiving the navigation data from the wireless network, converting the navigation data into longitude and latitude coordinate values, transmitting the longitude and latitude coordinate values to the mobile communication terminal and performs transmission and reception of the data pertinent to the position determination.

In accordance with another example, there is provided a method for monitoring performance of position determination of a mobile communication terminal in a communication system including a mobile communication terminal by using a wireless network and an Assisted-GPS, the method comprising
at the mobile communication terminal, picking up GPS radio wave containing a navigation data from a GPS satellite and transmitting the navigation data to the wireless network;
loading and running a LBS wireless network analysis program at a test device connected to the mobile communication network through wired/radio link;
at a position determination server, receiving the navigation data from the wireless network, converting the navigation data into longitude and latitude coordinate values, transmitting the longitude and latitude coordinate values to the mobile communication terminal and exchanging data pertinent to the position determination with the mobile communication terminal, wherein the data pertinent to the position determination includes a first information on the GPS satellite which the position determination server is arranged to transmit to the mobile communication terminal for aiding position determination of the mobile communication terminal and a second information on the GPS satellite which the mobile communication terminal is arranged to perceive actually,
wherein running the LBS wireless network analysis program at the test device comprises receiving the data pertinent to the position determination from the mobile communication terminal, extracting the first information on the GPS satellite and the second information on GPS satellite, and analyzing and displaying the first information on the GPS satellite and the second information on GPS satellite.

The above and other features and advantages will be more apparent from the following detailed description taken in conjunction with the accompanying drawings, in which:
FIG. 1 is a block diagram sketching a monitoring system 100 for monitoring location determination performance of an A-GPS method;
FIG. 2 shows the LBS messages communicated between the mobile communication terminal 110 and the position determination server 162;
FIG. 3 gives an exemplary two dimensional constellation of multiple satellites about the true position of the mobile communication terminal 110; and
FIG. 4 is an exemplary screen displaying coordinate values of the mobile communication terminal 110 measured in accordance with the present disclosure about the concentric circles.

Hereinafter, a preferred example will be described with reference to the accompanying drawings. In the drawings, the same element, although depicted in different drawings, will be designated by the same reference numeral or character. Also, in the following description, a detailed description of known functions and configurations incorporated herein will be omitted when it may make the subject matter unclear.

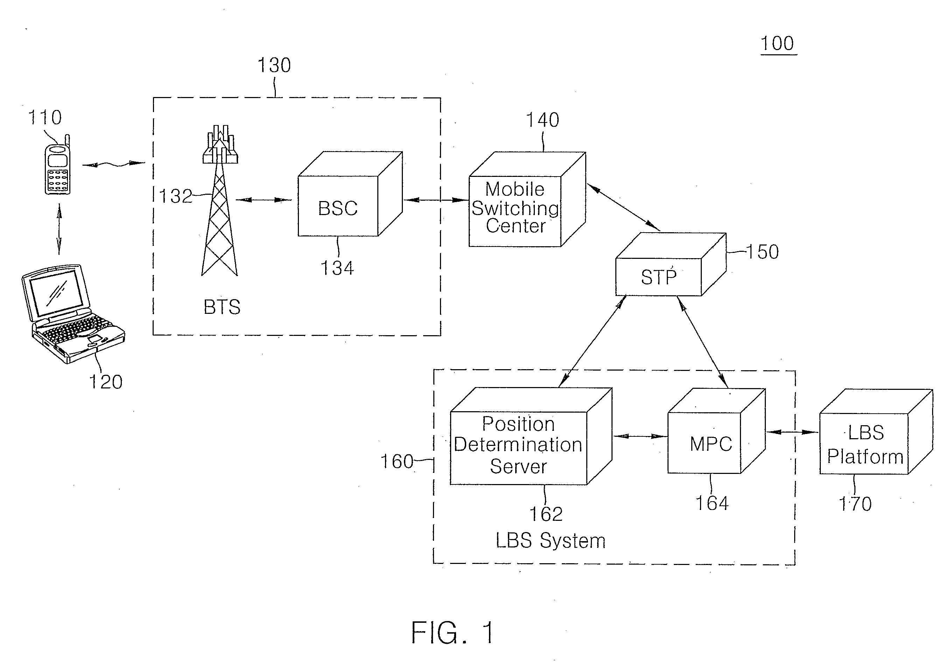

FIG. 1 is a block diagram sketching a monitoring system 100 for monitoring location determination performance of an A-GPS method.

The monitoring system 100 includes a mobile communication terminal 110, a test device 120, a radio base station 130, a mobile switching center 140, a STP 150, a LBS system 160 and a LBS platform 170.

The mobile communication terminal 110 which is equipped with a GPS antenna, a GPS receiver, a GPS chip set, etc., to thereby pick up GPS radio wave broadcast from orbiting GPS satellites (not shown), extracts navigation data from the GPS radio wave and transmits the navigation data to the LBS system 160.

The mobile communication terminal 110 can be a PDA (Personal digital Assistant), a cellular phone, a PCS (Personal Communication Service) phone, a hand-held PC, a GSM (Global System for Mobile) phone, a W-CDMA phone, an EV-DO phone, a MBS (Mobile Broadband System) phone, a WLL (Wireless Local Loop) phone and a digital TRS (Trunked Radio System) phone. Herein, the MBS phone refers to a mobile phone which will be used in fourth-generation communication systems.

The test device 120 procures various parameters defined in the IS-801-1 standard in relation to the position fix from the mobile communication terminal 110 through wired and/or radio link, analyzes and processes the parameters, and displays the result of the analysis and the process. Herein, the radio communication refers to, but not limited to, an infra-red communication, a bluetooth communication or a RF (Radio Frequency) communication. The test device 120 is loaded with a built-in LBS wireless network analysis program for performing analysis on the performance of the position determination and providing display of analysis results by using the parameters defined the IS-801-1 standard.

The LBS wireless network analysis program procures the LBS messages defined in the IS-801-1 standard which the mobile communication terminal 110 collects from a position determination server 162, performs analysis on the LBS messages and displays analysis results. In addition, the LBS wireless network analysis program displays information on the wireless network to which the mobile communication terminal 110 is being currently connected, a pseudo random noise code of a radio base station which gathers and transmits the LBS messages from the position determination server 162 and the strength of the pseudo random noise code.

The mobile communication network can be a CDMA (Code Division multiple Access), GSM (Global system for Mobile communication), CDMA2000 1X, 3X, EV-DO, EV-DV, WCDMA (Wideband CDMA), PI (Portable Internet), WLL (Wireless Local Loop) and Digital TRS (Trunked Radio System).

The radio base station 130, housed with a BTS (Base station Transceiver System) 132 and a BSC (Base Station Controller) 134, performs functions such as processing call request from the mobile communication terminal 110 and relaying the parameter messages defined IS-801-1 standard communicated between the mobile communication terminal 110 and the LBS system 160.

The base station transceiver system 132 is a network endpoint equipment generally performing a base band signal processing, wired/radio conversion, transmission and reception of wireless signal, and especially in the preferred embodiment, performs communication with the test device 120 via the mobile communication terminal 110.

The base station controller 134 which performs comprehensive control over the base station transceiver system 132 performs various functions such as a radio channel allocation and release with respect to the mobile communication terminal 110, transmission power control of the test device 120 and the base station transceiver system 132, decision of soft handoff or hard handoff, transcoding and vocoding, GPS clock distribution, operation and maintenance of the base station transceiver system 132.

The mobile switching center 140 controls the radio base station to more effectively operate and communicate with an electronic switching system installed in a public telephone network. The mobile switching center 140 receives data or messages from the mobile communication terminal 110 through the radio base station 130 and transfers the received data or messages to the position determination server 162.

The signal transfer point (STP) 150 is a signal relay station for relaying and exchanging signal messages in a common channel signaling system of ITU-T. A signal network formed using the STP 150 operates in a non-associated mode which does not associate a speech path with a signal path. Various signals are transferred via the STP 150 having a speech path, other than a switching center, thereby improving reliability and cost-effectiveness. Also, the STP 150 converts a signal message. When it is not possible to relay a signal message, the STP 150 notifies the signal message to another switching center.

The LBS system 160 includes a position determination server 162 and a MPC(Mobile Positioning Center) 164. The position determination server 162 calculates longitude and latitude coordinate values by using the navigation data received from the mobile communication terminal 110 through the wireless network. Further, the position determination server 162 transmits an aiding data for use in the position determination of the mobile communication terminal 110 and calculates distance between the GPS satellite and the mobile communication terminal 110. Herein, the aiding data is transmitted according to the TCP/IP protocol.

The mobile positioning center 164 obtains the longitude and latitude coordinate values of the mobile communication terminal 110 calculated at the position determination server 162 and transmits the coordinate values to the LBS platforms 170 that provides various location based services.

The LBS platform 170 comprehensively refers to an application server for providing the location based services for the mobile communication terminal 110. The LBS platform 170 obtains the longitude and latitude coordinate values of the mobile communication terminal 110, performs coordinate conversion and the like, and finally provides the location based services. The data exchange between the position determination server 162 or the position center 164 and the LBS platform 170 is executed based on the TCP/IP protocol.

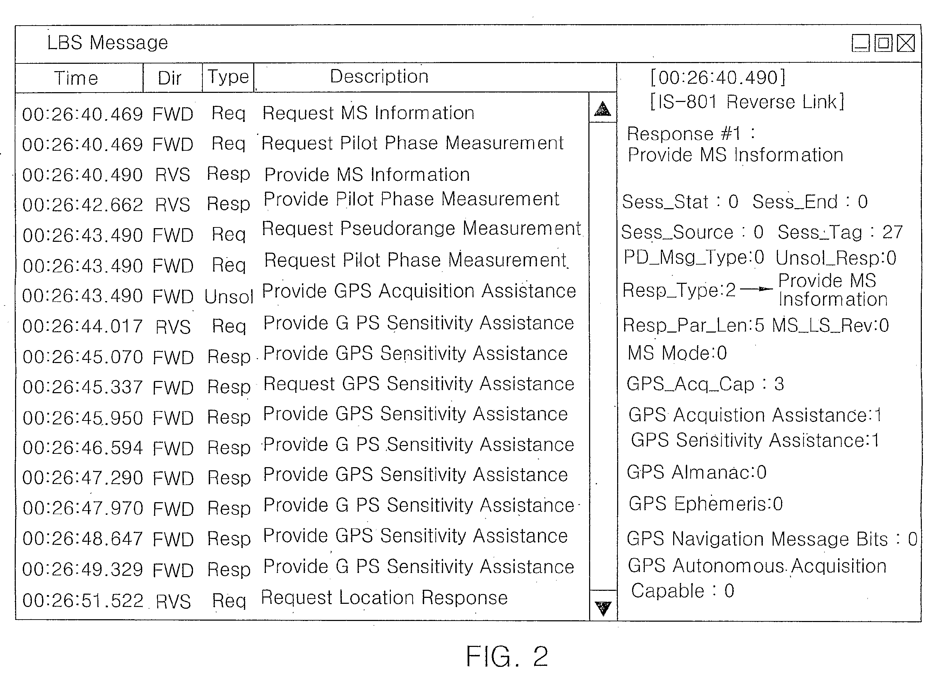

FIG. 2 shows the LBS messages communicated between the mobile communication terminal 110 and the position determination server 162.

Referring to the exemplary screen of FIG. 2, a transmission time, message type and message name of the LBS message defined in the IS-801-1 standard are displayed. These messages transmitted and received between the mobile communication terminal 110 and the position determination server 162 and displayed on a real time basis on the screen of the test device 120. The user can easily rearrange the messages according to time and type of the messages and monitor rearranged messages displayed on the test device 120.

Kinds of messages analyzed and displayed by the LBS wireless network analysis program, as shown in FIG. 2, "Request MS Information", "Request Pilot Phase Measurement", "Provide MS Information", "Provide Pilot Phase Measurement", "Request Pseudorange Measurement", "Provide Pseudorange Measurement", "Provide GPS Acquisition Assistance", "Provide GPS Sensitivity Assistance", "Request Location response", etc.

The LBS wireless network analysis program classifies the LBS messages as forward channel messages versus reverse channel messages and distinctively displays the classified LBS messages, wherein the forward channel messages refer to LBS messages transmitted from the position determination server 162 toward the mobile communication terminal 110 whereas the reverse channel messages refer to LBS messages transmitted from the mobile communication terminal 110 toward the position determination server 162. Also the LBS wireless network analysis program classifies the LBS messages according to time of transmission or reception or according to a message type, e.g., a request type(Req_Type) and a response type(Resp_Type) to display distinctively each classified messages.

Turning back to FIG. 2, detailed information on the "Provide MS Information" message which is highlighted on the third row of the left hand side of the screen is being displayed on the right hand side of the screen. On the right hand side of the screen, information on auxiliary data for use in the mobile communication terminal's reception of the GPS radio wave such as a GPS Acquisition Assistance, GPS Sensitivity Assistance, GPS Almanac, GPS Ephemeris, GPS Navigation Message Bits, GPS Almanac Correction and GPS Autonomous Acquisition Capable are being displayed.

Herein, the message "Provide MS Information" is well known from the IS-801-1 standard as such will not be discussed in great detail.

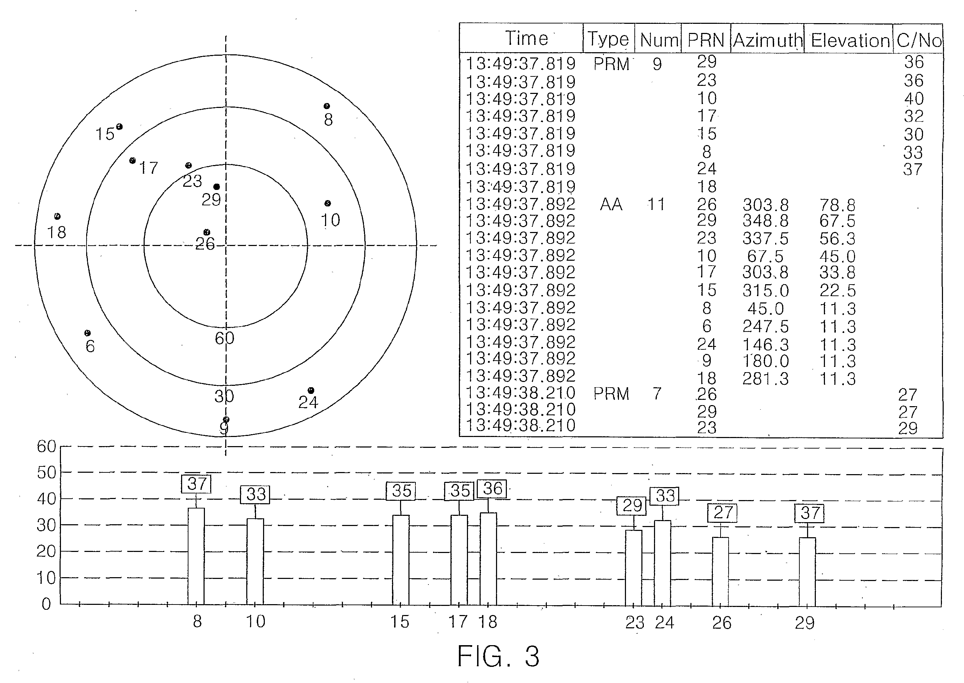

FIG. 3 gives an exemplary two dimensional constellation of a multiple satellites about the true position of the mobile communication terminal 110.

Description will now be given in conjunction with FIG. 1 and FIG. 3. The position determination server 162 transmits the "Provide GPS Acquisition Assistance" message defined in the IS-801-1 standard to the mobile communication terminal 110. The mobile communication terminal 110 transmits the "Provide GPS Acquisition Assistance" message to the test device 120 which is connected to the mobile communication terminal 110 through wired cable link. Consequently, the LBS wireless network analysis program extracts an azimuth angle and an elevation angle for each satellite contained in the "Provide GPS Acquisition Assistance" message. The LBS wireless network analysis program displays at least one GPS satellite which is visible from the true position of the mobile communication terminal 110 on the two dimensional plane by using extracted azimuth angle and the elevation angle.

Meanwhile, the LBS wireless network analysis program indicates with a certain color the information of the GPS satellite(identification number of the GPS satellite) which the position determination server 162 provides for the mobile communication terminal 110 and extracts information on the GPS satellite that the mobile communication terminal 110 perceived from the "Provide Pseudorange Measurement" message. Next, the LBS wireless network analysis program indicates the GPS satellite that the mobile communication terminal 110 perceived on the same screen but with a different color to thereby enable the user to acquire knowledge on which satellite the mobile communication terminal 110 perceives in true test environment.

Turning back to FIG. 3, around the concentric circles, there are indicated an identification number of the GPS satellite(PRN number) included in the "Provide GPS Acquisition" message that the mobile communication terminal 110 receives from the position determination server 162 as well as an identification number of the GPS satellite that the mobile communication terminal 110 actually gained acquisition by using the "Provide GPS Acquisition" message. Herein, the concentric circles are indicated by reference to the elevation angle, the outermost circle being 0 degree, next being 30 degrees, the next being 60 degrees and the center being 90 degrees.

In the concentric circles of FIG. 3, the identification numbers of the GPS satellites 8, 10, 15, 17, 23, 26 and 29 are information included in the "Provide GPS Acquisition" message, whereas the identification numbers of the GPS satellites 6, 9, 18 and 24 are information that the mobile communication terminal 110 actually gained acquisition from the "Provide GPS Acquisition" message. The position determination performance is considered fine as the number of matching numbers between these two groups of identification numbers is large.

The LBS wireless network analysis program renders the screen to display a C/No(Carrier to Noise) or the strength of the GPS radio wave transmitted from each GPS satellite that the mobile communication terminal 110 actually gained acquisition along with the relevant identification number of the GPS satellite. Herein the C/No is a value presenting a reception sensitivity of the GPS radio wave broadcast from each GPS satellite. In other words, the C/No is a signal to noise ratio at 1 Hz bandwidth and is an important indicator in evaluation of capability of a GPS receiver. The larger the C/No value is the better the mobile communication terminal 110 receives GPS radio wave. The LBS wireless network analysis program, as shown in lower part of FIG. 3, displays the identification number of the GPs satellites and respective C/No values with a bar graph on the two dimensional coordinate along with the numeric C/No values.

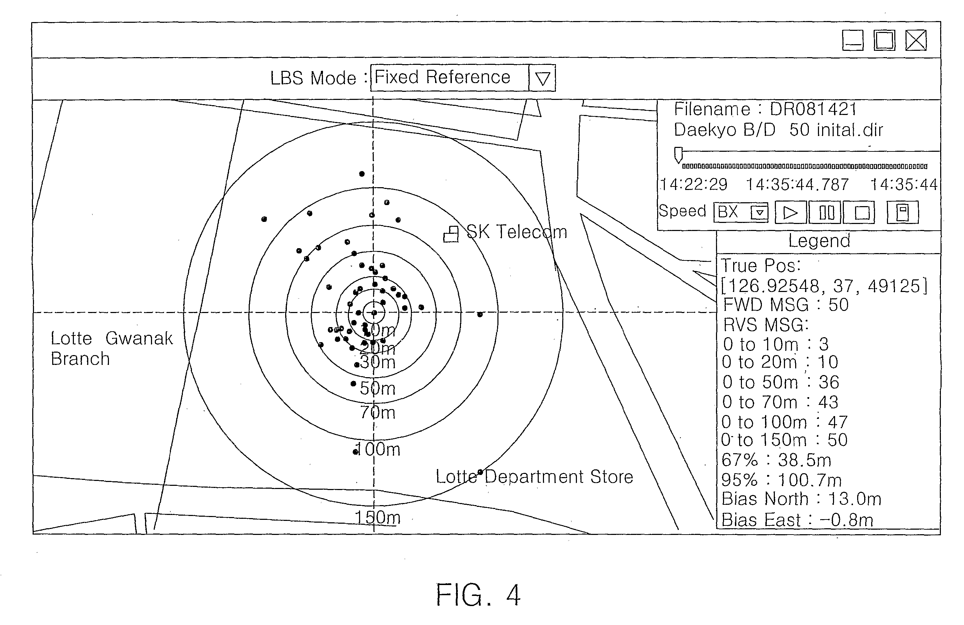

FIG. 4 is an exemplary screen displaying coordinate values of the mobile communication terminal 110 measured in accordance with the present disclosure about the concentric circles.

Describing in conjunction with FIG. 1 and FIG. 4, the position determination server 162 transmits the "Provide Location Response "message that includes longitude and latitude values of the mobile communication terminal 110. The "Provide Location Response" message arrived at the mobile communication terminal 110 consequently forwarded to the test device 120 through the wired cable link, and finally the LBS wireless network analysis program extracts the longitude and the latitude values included in the "Provide Location Response" message and renders the values as a point on the map. To display the map on the screen, the test device 120 is loaded with electronic map data.

Herein, the electronic map data stored in the test device 120 has been made in WGS (World Geodetic System)-84 format. The map can also display concentric circles centering at a specific location with an interval of e. g., 50 meters as well as 4 directional intersections. In addition, the LBS wireless network analysis program is capable of zooming in or zooming out the map by the reference of the concentric circles or the 4 directional intersections and displaying the map zoomed in or zoomed out.

The LBS wireless network analysis program extracts the longitude and latitude values of the mobile communication terminal 110 contained in the "Provide Location Response" message which has been received from the position determination server 162 and displays the position of the mobile communication terminal on the map.

To be more specific, the LBS wireless network analysis program displays some area of the map around the coordinate values of the true position of the mobile communication terminal 110. Herein, the coordinate values of the true position can be determined as an average value of the measured positions(longitude and latitude values). At least one concentric circles having different radius each center of which is the coordinate values of the true position are displayed. For instance, the radius of the concentric circles may be 10 m, 20 m, 30 m, 50 m, 100 m, 150 m and the like.

Next, the LBS wireless network analysis program extracts the longitude and latitude values from the "Provide Location Response" message received from the mobile communication terminal 110 and displays the longitude and latitude values on the map. In case the positions of the mobile communication terminal 110 are consecutively determined, the measured position values are sequentially indicated on the map. Therefore, the measured values consecutively measured are indicated in each concentric circle as shown in FIG. 4.

In the meantime, the LBS wireless network analysis program supports both a fixed reference mode and a moving reference mode. The fixed reference mode refers to a map display method that the measured position is analyzed and indicated while the position of the mobile communication terminal 110 is fixed at a certain point, while the moving reference mode refers to another map display method that the measured position is analyzed and indicated while the position of the mobile communication terminal 110 is moving about on the map. In case of the moving reference mode, the real time measured position of the mobile communication terminal 110 are set to be always located at the center of the map so that the map is made shifting according to the movement of the position of the mobile communication terminal 110.

The horizontal axis(x-axis) represents a measurement sequence and the vertical axis(y-axis) represents a position error between the true position and the measured position. The position errors associated with the measurement sequence are indicated as dots on a real time basis and each neighboring dot is consecutively connected with a line so that the trend of the distant errors may be easily read.

The LBS wireless network analysis program estimates and displays the number of total measurements; the number of measurements having position error whose radius is less than each of 10 m, 20 m, 30 m, 50 m, 100 m, 150 m, respectively; and/or the number of measurements having position error within up to 67% or 95% counting from the least position error among the total measured points. Referring to FIG. 4, it can be known that 67% of the measured points lie within the circle of radius 38.5 m and 95% of the measured points lie within the circle of radius 100.7 m, the center of each circle being the true position of the mobile communication terminal 110.

Certainly, the scale or range of the position errors can vary. In addition to the above, the LBS wireless network analysis program is capable of calculating and displaying a so-called "bias east" or "bias north", wherein the bias east may be an average horizontal component of the position errors accumulated up to a certain time and the bias north may be an average vertical component of the position errors accumulated up to the certain time.

Meanwhile, the LBS wireless network analysis program can be stored in a computer-readable storage medium, wherein the storage medium can be any one out of a floppy disc, a hard disc, a ZIP disc, a JAZ disc, a compact disc, a DVD (Digital Versatile Disc).

As described above, evaluation of the position determination performance can be promptly and effectively performed by using the method and system in accordance with the present disclosure.

In addition, the wireless network operator can provide higher quality location based services to the users since the method and system provide prompt identification of the reasons for failure of the position determination when the position determination suffers.

## Claims

1. A system for monitoring performance of a position determination of a mobile communication terminal (110) by using a wireless network and an Assisted-GPS, the system comprising:
the mobile communication terminal (110) equipped with a GPS module for picking up GPS radio wave containing a navigation data from a GPS satellite and transmitting the navigation data to the wireless network;
a test device (120), connected to the mobile communication terminal (110) through wired/radio link, for being loaded with and running a LBS wireless network analysis program; and
a position determination server (162) for receiving the navigation data from the wireless network, converting the navigation data into longitude and latitude coordinate values, transmitting the longitude and latitude coordinate values to the mobile communication terminal (110) and exchanging data pertinent to the position determination with the mobile communication terminal (110), wherein the data pertinent to the position determination includes a first information on the GPS satellite which the position determination server (162) is arranged to transmit to the mobile communication terminal (110) for aiding position determination of the mobile communication terminal (110) and a second information on the GPS satellite which the mobile communication terminal (110) is arranged to perceive actually,
wherein the LBS wireless network analysis program in the test device (120) is arranged to receive the data pertinent to the position determination from the mobile communication terminal (110), extract the first information on the GPS satellite and the second information on GPS satellite, and analyze and display the first information on the GPS satellite and the second information on GPS satellite.

2. The system of claim 1, wherein the data pertinent to the position determination is a LBS message that the mobile communication terminal acquires from the position determination server, the LBS message being defined in the IS-801-1 standard, and the LBS wireless network communication network analyzes the LBS message and consequently indicates the time information of transmission or reception of the LBS message, the name of the LBS message, and a type of message, wherein the type of message is whether the LBS message is a forward channel message, a reverse channel message, a request message or a response message.

3. The system of claim 1 or 2, wherein the LBS wireless network analysis program analyzes and displays information on the GPS satellite, wherein the information on the GPS satellite is more than one out of an azimuth angle, an elevation angle, a total number of the GPS satellites and an identification number of each satellite included in a "Provide GPS Acquisition" message, or a "Provide Pseudorange Measurement" message.

4. The system of claim 2, wherein the LBS wireless communication analysis program extracts and displays information on the wireless network, a pseudo random noise code of a radio base station which transmits the LBS message and strength of the pseudo random noise code, from the LBS message.

5. A method for monitoring performance of position determination of a mobile communication terminal in a communication system including a mobile communication terminal by using a wireless network and an Assisted-GPS, the method comprising
at the mobile communication terminal, picking up GPS radio wave containing a navigation data from a GPS satellite and transmitting the navigation data to the wireless network;
loading and running a LBS wireless network analysis program at a test device connected to the mobile communication network through wired/radio link;
at a position determination server, receiving the navigation data from the wireless network, converting the navigation data into longitude and latitude coordinate values, transmitting the longitude and latitude coordinate values to the mobile communication terminal and exchanging data pertinent to the position determination with the mobile communication terminal, wherein the data pertinent to the position determination includes a first information on the GPS satellite which the position determination server is arranged to transmit to the mobile communication terminal for aiding position determination of the mobile communication terminal and a second information on the GPS satellite which the mobile communication terminal is arranged to perceive actually,
wherein running the LBS wireless network analysis program at the test device comprises receiving the data pertinent to the position determination from the mobile communication terminal, extracting the first information on the GPS satellite and the second information on GPS satellite, and analyzing and displaying the first information on the GPS satellite and the second information on GPS satellite.

6. The method of claim 5, wherein the data pertinent to the position determination is a LBS message that the mobile communication terminal acquires from the position determination server, the LBS message being defined in the IS-801-1 standard, and the LBS wireless network communication network analyzes the LBS message and consequently indicates the time information of transmission or reception of the LBS message, the name of the LBS message, and a type of message, wherein the type of message is whether the LBS message is a forward channel message, a reverse channel message, a request message or a response message.

7. The method of claim 5 or 6, wherein the LBS wireless network analysis program analyzes and displays information on the GPS satellite, wherein the information on the GPS satellite is more than one out of an azimuth angle, an elevation angle, a total number of the GPS satellites and an identification number of each satellite included in a "Provide GPS Acquisition" message, or a "Provide Pseudorange Measurement" message.

8. The method of claim 6, wherein the LBS wireless communication analysis program extracts and displays information on the wireless network, a pseudo random noise code of a radio base station which transmits the LBS message and strength of the pseudo random noise code, from the LBS message.

## Patentansprüche

1. System zum Überwachen der Leistung einer Positionsbestimmung eines mobilen Kommunikations-Endgeräts (110) durch das Verwenden eines Drahtlosnetzwerks und eines Assisted-GPS, wobei das System Folgendes umfasst:
das mobile Kommunikations-Endgerät (110), ausgestattet mit einem GPS-Modul zum Aufnehmen einer GPS-Funkwelle, die Navigationsdaten enthält, von einem GPS-Satelliten und zum Übertragen der Navigationsdaten an das Drahtlosnetzwerk;
eine Testvorrichtung (120), verbunden mit dem mobilen Kommunikations-Endgerät (110) durch eine Draht-/Funkverbindung, für das Laden und Ausführen eines Analyseprogramms von LBS des Drahtlosnetzwerks; und
einen Positionsbestimmungsserver (162) zum Empfangen der Navigationsdaten vom Drahtlosnetzwerk, Umwandeln der Navigationsdaten in Längen- und Breiten-Koordinatenwerte, Übertragen der Längen- und Breiten-Koordinatenwerte an das mobile Kommunikations-Endgerät (110) und Austauschen von die Positionsbestimmung betreffenden Daten mit dem mobilen Kommunikations-Endgerät (110), wobei die die Positionsbestimmung betreffenden Daten eine erste Information über den GPS-Satelliten enthalten, für deren Übertragen an das mobile Kommunikations-Endgerät (110) der Positionsbestimmungsserver (162) angeordnet ist, um bei der Positionsbestimmung des mobilen Kommunikations-Endgeräts (110) zu helfen, und eine zweite Information über den GPS-Satelliten, für deren effektives Wahrnehmen das mobile Kommunikations-Endgerät (110) angeordnet ist,
wobei das Analyseprogramm von LBS des Drahtlosnetzwerks in der Testvorrichtung (120) dazu angeordnet ist, die die Positionsbestimmung betreffenden Daten vom mobilen Kommunikations-Endgerät (110) zu empfangen, die erste Information über den GPS-Satelliten und die zweite Information über den GPS-Satelliten zu extrahieren und die erste Information über den GPS-Satelliten und die zweite Information über den GPS-Satelliten zu analysieren und anzuzeigen.

2. System nach Anspruch 1, wobei die die Positionsbestimmung betreffenden Daten eine LBS-Nachricht sind, die das mobile Kommunikations-Endgerät vom Positionsbestimmungsserver erhält, wobei die LBS-Nachricht in der Norm IS-801-1 definiert ist und das LBS-Drahtlosnetzwerk-Kommunikationsnetzwerk die LBS-Nachricht analysiert und anschließend die Zeitinformation der Übertragung oder des Empfangs der LBS-Nachricht, den Namen der LBS-Nachricht und einen Nachrichtentyp anzeigt, wobei der Nachrichtentyp besagt, ob die LBS-Nachricht eine Vorwärtskanalnachricht, eine Rückwärtskanalnachricht, eine Anfragenachricht oder eine Antwortnachricht ist.

3. System nach Anspruch 1 oder 2, wobei das Analyseprogramm von LBS des Drahtlosnetzwerks Informationen über den GPS-Satelliten analysiert und anzeigt, wobei die Informationen über den GPS-Satelliten mehr als eine von einem Azimutwinkel, einem Höhenwinkel, einer Gesamtanzahl der GPS-Satelliten und einer Identifikationsnummer jedes Satelliten sind, enthalten in einer "Bereitstellung von GPS-Datenerfassung"-Nachricht (Provide GPS Acquisition) oder einer "Bereitstellung von Pseudostreckenmessung"-Nachricht (Provide Pseudorange Measurement).

4. System nach Anspruch 2, wobei das Analyseprogramm von LBS des Drahtlosnetzwerks Informationen über das Drahtlosnetzwerk, einen Pseudozufallsrauschen-Code einer Funkbasisstation, welche die LBS-Nachricht überträgt, und die Stärke des Pseudozufallsrauschen-Codes aus der LBS-Nachricht extrahiert und anzeigt.

5. Verfahren zum Überwachen der Leistung einer Positionsbestimmung eines mobilen Kommunikations-Endgeräts in einem Kommunikationssystem einschließlich eines mobilen Kommunikations-Endgeräts durch das Verwenden eines Drahtlosnetzwerks und eines Assisted-GPS, wobei das Verfahren Folgendes umfasst:
am mobilen Kommunikations-Endgerät, Aufnehmen einer GPS-Funkwelle, die Navigationsdaten enthält, von einem GPS-Satelliten und Übertragen der Navigationsdaten an das Drahtlosnetzwerk;
Laden und Ausführen eines Analyseprogramms von LBS des Drahtlosnetzwerks auf einer Testvorrichtung, verbunden mit dem mobilen Kommunikationsnetzwerk durch eine Draht-/Funkverbindung; und
an einem Positionsbestimmungsserver, Empfangen der Navigationsdaten vom Drahtlosnetzwerk, Umwandeln der Navigationsdaten in Längen- und Breiten-Koordinatenwerte, Übertragen der Längen- und Breiten-Koordinatenwerte an das mobile Kommunikations-Endgerät und Austauschen von die Positionsbestimmung betreffenden Daten mit dem mobilen Kommunikations-Endgerät, wobei die die Positionsbestimmung betreffenden Daten eine erste Information über den GPS-Satelliten enthalten, für deren Übertragen an das mobile Kommunikations-Endgerät der Positionsbestimmungsserver angeordnet ist, um bei der Positionsbestimmung des mobilen Kommunikations-Endgeräts zu helfen, und eine zweite Information über den GPS-Satelliten, für deren effektives Wahrnehmen das mobile Kommunikations-Endgerät angeordnet ist,
wobei das Ausführen des Analyseprogramms von LBS des Drahtlosnetzwerks auf der Testvorrichtung das Empfangen der die Positionsbestimmung betreffenden Daten vom mobilen Kommunikations-Endgerät, das Extrahieren der ersten Information über den GPS-Satelliten und der zweiten Information über den GPS-Satelliten und das Analysieren und Anzeigen der ersten Information über den GPS-Satelliten und der zweiten Information über den GPS-Satelliten umfasst.

6. Verfahren nach Anspruch 5, wobei die die Positionsbestimmung betreffenden Daten eine LBS-Nachricht sind, die das mobile Kommunikations-Endgerät vom Positionsbestimmungsserver erhält, wobei die LBS-Nachricht in der Norm IS-801-1 definiert ist und das LBS-Drahtlosnetzwerk-Kommunikationsnetzwerk die LBS-Nachricht analysiert und anschließend die Zeitinformation der Übertragung oder des Empfangs der LBS-Nachricht, den Namen der LBS-Nachricht und einen Nachrichtentyp anzeigt, wobei der Nachrichtentyp besagt, ob die LBS-Nachricht eine Vorwärtskanalnachricht, eine Rückwärtskanalnachricht, eine Anfragenachricht oder eine Antwortnachricht ist.

7. Verfahren nach Anspruch 5 oder 6, wobei das Analyseprogramm von LBS des Drahtlosnetzwerks Informationen über den GPS-Satelliten analysiert und anzeigt, wobei die Informationen über den GPS-Satelliten mehr als eine von einem Azimutwinkel, einem Höhenwinkel, einer Gesamtanzahl der GPS-Satelliten und einer Identifikationsnummer jedes Satelliten sind, enthalten in einer "Bereitstellung von GPS-Datenerfassung"-Nachricht (Provide GPS Acquisition) oder einer "Bereitstellung von Pseudostreckenmessung"-Nachricht (Provide Pseudorange Measurement).

8. Verfahren nach Anspruch 6, wobei das Analyseprogramm von LBS des Drahtlosnetzwerks Informationen über das Drahtlosnetzwerk, einen Pseudozufallsrauschen-Code einer Funkbasisstation, welche die LBS-Nachricht überträgt, und die Stärke des Pseudozufallsrauschen-Codes aus der LBS-Nachricht extrahiert und anzeigt.

## Revendications

1. Système de surveillance de performances d'une détermination de position d'un terminal de communication mobile (110) en utilisant un réseau sans fil et un GPS assisté, le système comprenant :
le terminal de communication mobile (110) équipé d'un module GPS pour capter une onde radio GPS contenant des données de navigation d'un satellite GPS et pour transmettre les données de navigation au réseau sans fil ;
un dispositif de test (120) relié au terminal de communication mobile (110) par l'intermédiaire d'une liaison filaire/radio, pour être chargé d'un programme d'analyse de réseau sans fil LBS qu'il exécute ; et
un serveur de détermination de position (162) pour recevoir les données de navigation du réseau sans fil, convertir les données de navigation en valeurs de coordonnées de longitude et de latitude, transmettre les valeurs de coordonnées de longitude et de latitude au terminal de communication mobile (110) et échanger des données pertinentes à la détermination de position avec le terminal de communication mobile (110), dans lequel les données pertinentes à la détermination de position comprennent une première information sur le satellite GPS que le serveur de détermination de position (162) est agencé pour transmettre au terminal de communication mobile (110) afin de faciliter la détermination de position du terminal de communication mobile (110) et une deuxième information sur le satellite GPS que le terminal de communication mobile (110) est agencé pour percevoir réellement,
dans lequel le programme d'analyse de réseau sans fil LBS dans le dispositif de test (120) est agencé pour recevoir les données pertinentes à la détermination de position du terminal de communication mobile (110), extraire la première information sur le satellite GPS et la deuxième information sur le satellite GPS, et analyser et afficher la première information sur le satellite GPS et la deuxième information sur le satellite GPS.

2. Système selon la revendication 1, dans lequel les données pertinentes à la détermination de position sont un message LBS que le terminal de communication mobile acquiert du serveur de détermination de position, le message LBS étant défini dans la norme IS-801-1, et le réseau de communication de réseau sans fil LBS analyse le message LBS et indique en conséquence les informations de temps de la transmission ou de la réception du message LBS, le nom du message LBS, et un type de message, dans lequel le type de message est si le message LBS est un message de voie aller, un message de voie retour, un message de demande ou un message de réponse.

3. Système selon la revendication 1 ou 2, dans lequel le programme d'analyse de réseau sans fil LBS analyse et affiche des informations sur le satellite GPS, dans lequel les informations sur le satellite GPS sont plusieurs d'un angle d'azimut, d'un angle d'élévation, d'un nombre total de satellites GPS et d'un numéro d'identification de chaque satellite inclus dans un message « Fournir acquisition GPS » ou un message « Fournir mesure de pseudo-distance ».

4. Système selon la revendication 2, dans lequel le programme d'analyse de communication sans fil LBS extrait et affiche des informations sur le réseau sans fil, un code de bruit pseudo-aléatoire d'une station de base radio qui transmet le message LBS et la force du code de bruit pseudo-aléatoire à partir du message LBS.

5. Procédé de surveillance de performances d'une détermination de position d'un terminal de communication mobile dans un système de communication comprenant un terminal de communication mobile en utilisant un réseau sans fil et un GPS assisté, le procédé comprenant :
au niveau du terminal de communication mobile, capter une onde radio GPS contenant des données de navigation d'un satellite GPS et transmettre les données de navigation au réseau sans fil ;
charger et exécuter un programme d'analyse de réseau sans fil LBS à un dispositif de test relié au réseau de communication mobile par l'intermédiaire d'une liaison filaire/radio ;
à un serveur de détermination de position, recevoir les données de navigation du réseau sans fil, convertir les données de navigation en valeurs de coordonnées de longitude et de latitude, transmettre les valeurs de coordonnées de longitude et de latitude au terminal de communication mobile et échanger des données pertinentes à la détermination de position avec le terminal de communication mobile, dans lequel les données pertinentes à la détermination de position comprennent une première information sur le satellite GPS que le serveur de détermination de position est agencé pour transmettre au terminal de communication mobile afin de faciliter la détermination de position du terminal de communication mobile et une deuxième information sur le satellite GPS que le terminal de communication mobile est agencé pour percevoir réellement,
dans lequel l'exécution du programme d'analyse de réseau sans fil LBS au niveau du dispositif de test comprend recevoir les données pertinentes à la détermination de position du terminal de communication mobile, extraire la première information sur le satellite GPS et la deuxième information sur le satellite GPS, et analyser et afficher la première information sur le satellite GPS et la deuxième information sur le satellite GPS.

6. Procédé selon la revendication 5, dans lequel les données pertinentes à la détermination de position sont un message LBS que le terminal de communication mobile acquiert du serveur de détermination de position, le message LBS étant défini dans la norme IS-801-1, et le réseau de communication de réseau sans fil LBS analyse le message LBS et indique en conséquence les informations de temps de la transmission ou de la réception du message LBS, le nom du message LBS, et un type de message, dans lequel le type de message est si le message LBS est un message de voie aller, un message de voie retour, un message de demande ou un message de réponse.

7. Procédé selon la revendication 5 ou 6, dans lequel le programme d'analyse de réseau sans fil LBS analyse et affiche des informations sur le satellite GPS, dans lequel les informations sur le satellite GPS sont plusieurs d'un angle d'azimut, d'un angle d'élévation, d'un nombre total de satellites GPS et d'un numéro d'identification de chaque satellite inclus dans un message « Fournir acquisition GPS » ou un message « Fournir mesure de pseudo-distance ».

8. Procédé selon la revendication 6, dans lequel le programme d'analyse de communication sans fil LBS extrait et affiche des informations sur le réseau sans fil, un code de bruit pseudo-aléatoire d'une station de base radio qui transmet le message LBS et la force du code de bruit pseudo-aléatoire à partir du message LBS.
